# EUROPEAN PATENT APPLICATION

(11) **EP 4 258 433 A1**
(43) Date of publication of application: **11.10.2023**
(21) Application number: 23165397.3
(22) Date of filing: 30.03.2023
(51) Int. Cl.: H01M 50/105, H01M 50/119, H01M 50/121, H01M 50/129, H01M 50/131, H01M 50/178, H01M 50/184, H01M 50/186, H01M 50/548, H01M 50/557

(54) **BATTERY CELL AND METHOD OF MANUFACTURING THE SAME**

(30) Priority: 08.04.2022 KR 20220043923
(71) Applicant: SK On Co., Ltd., Seoul 03161 (KR)
(72) Inventor: JEONG, Taek Eon, 34124 Daejeon (KR); KIM, Dong Ju, 34124 Daejeon (KR); KIM, Sang Mo, 34124 Daejeon (KR); PARK, Sun Min, 34124 Daejeon (KR); CHOI, Seung Won, 34124 Daejeon (KR); HWANG, Ju Won, 34124 Daejeon (KR)
(74) Representative: Bird & Bird LLP

(57) **Abstract**

A battery cell and a method of manufacturing the same are disclosed. The battery cell is a battery cell including an electrode assembly (200) and a pouch unit (100) accommodating the electrode assembly (200). The battery cell comprises a cell body (11) including an accommodation portion accommodating the electrode assembly (200) in the pouch unit (100) and the electrode assembly (200), a cell edge (17) forming a perimeter of the battery cell, and a cell edge portion (19) formed between the cell edge (17) and the cell body (11). The pouch unit (100) is made of a pouch sheet. The cell edge portion (19) includes a first pouch edge portion and a second pouch edge portion facing each other in the pouch sheet, and a convex portion (1092) that is convex in a thickness direction of the cell edge portion (19).

## Description

### TECHNICAL FIELD

The present disclosure relates to a battery cell and a method of manufacturing the same. In particular, the present disclosure relates to a battery cell increasing a sealing effect of the battery cell and a method of manufacturing the same.

### BACKGROUND

Due to repetitive charge/discharge processes and exposure to harsh environments, such as high temperature and high humidity, which occur during the manufacturing and use environment of a pouch battery cell, gas is continuously generated inside the pouch battery cell. This increases a pressure inside the battery cell. Hence, when the pressure is equal to or greater than a threshold that a pouch can withstand, a weak portion of a pouch seal is destroyed and the battery cell is damaged.

The weak portion of the pouch seal may be a sealing portion in which pouches facing each other are in contact with and coupled to each other. The pouches facing each other may be coupled by polymerizing a resin. If a thickness of the resin in the sealing portion is large, the pressure that the pouch can withstand may increase.

Patent Document 1: KR 10-1963313 B1

### SUMMARY

An object of the present disclosure is to address the above-described and other problems.

Another object of the present disclosure is to provide a battery cell increasing a pressure that a pouch can withstand by processing the pouch at an end of a pouch type battery cell, and a method of manufacturing the battery cell.

Another object of the present disclosure is to provide a battery cell forming a thickness profile of a pouch at an end of a pouch type battery cell, and a method of manufacturing the battery cell.

Another object of the present disclosure is to provide a battery cell forming a convex portion that is convex in a thickness direction at an end of a pouch type battery cell, and a method of manufacturing the battery cell.

Another object of the present disclosure is to provide a battery cell including a folding portion formed by folding a pouch at an end of a pouch type battery cell, and a method of manufacturing the battery cell.

In order to achieve the above-described and other objects and needs, in one aspect of the present disclosure, there is provided a battery cell including an electrode assembly and a pouch unit accommodating the electrode assembly, the battery cell comprising a cell body including an accommodation portion accommodating the electrode assembly and the electrode assembly, the accommodation portion being a part of the pouch unit; a cell edge forming a perimeter of the battery cell; and a cell edge portion formed between the cell edge and the cell body, wherein the pouch unit is made of a pouch sheet, wherein the cell edge portion includes a first pouch edge portion and a second pouch edge portion facing each other, the first and second edge portions extending from the accommodation portion, and a convex portion convex in a thickness direction of the cell edge portion.

In another aspect of the present disclosure, there is provided a method of manufacturing a battery cell including an electrode assembly and a pouch unit accommodating the electrode assembly, the method comprising a pouch molding step of forming a concave accommodation portion on one face of a pouch sheet forming the pouch unit; an electrode assembly seating step of seating the electrode assembly in the accommodation portion; and a cell edge portion forming step of forming a cell edge portion sealing the pouch sheet, wherein the cell edge portion includes a convex portion that is convex in a thickness direction of the cell edge portion.

Effects of the battery cell and the method of manufacturing the same according to the present disclosure are described as follows.

According to at least one aspect of the present disclosure, the present disclosure can provide a battery cell increasing a pressure that a pouch can withstand by processing the pouch at an end of a pouch type battery cell, and a method of manufacturing the battery cell.

According to at least one aspect of the present disclosure, the present disclosure can provide a battery cell forming a thickness profile of a pouch at an end of a pouch type battery cell, and a method of manufacturing the battery cell.

According to at least one aspect of the present disclosure, the present disclosure can provide a battery cell forming a convex portion that is convex in a thickness direction at an end of a pouch type battery cell, and a method of manufacturing the battery cell.

According to at least one aspect of the present disclosure, the present disclosure can provide a battery cell including a folding portion formed by folding a pouch at an end of a pouch type battery cell, and a method of manufacturing the battery cell.

Additional scope of applicability of the present disclosure will become apparent from the detailed description given blow. However, it should be understood that the detailed description and specific examples such as embodiments of the present disclosure are given merely by way of example, since various changes and modifications within the spirit and scope of the present disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 is a perspective view of a battery cell according to an embodiment of the present disclosure.
FIG. 2 is an exploded perspective view of a battery cell according to an embodiment of the present disclosure.
FIG. 3 illustrates a cross section of a pouch unit of FIG. 2 taken along B 1-B2.
FIG. 4A illustrates a cross section of a battery cell of FIG. 1 taken along A1-A2.
FIG. 4B illustrates a cross section of a battery cell of FIG. 1 taken along E1-E2.
FIG. 5 illustrates in detail a portion 'C' of FIG. 4A.
FIG. 6A illustrates that a pouch sheet is sealed using a sealing block.
FIG. 6B illustrates a sealing block sealing a pouch sheet on which an electrode tab is positioned.
FIG. 7 illustrates that a shape of a cell edge portion is formed using a roller and a plate.
FIG. 8 illustrates that a shape of a cell edge portion is formed using a pair of rollers.
FIG. 9A illustrates a cell edge portion after the cell edge portion illustrated in FIG. 4A is molded.
FIG. 9B illustrates a cell edge portion after the cell edge portion illustrated in FIG. 4B is molded.
FIG. 10A illustrates in detail a portion 'D' of FIG. 9A.
FIG. 10B illustrates in detail a portion 'F' of FIG. 9B.
FIG. 11 illustrates that an end of a cell edge portion is folded.
FIG. 12 is a flow chart illustrating a method of manufacturing a battery cell according to an embodiment of the present disclosure.
FIG. 13 is a flow chart illustrating a cell edge portion forming step.

### DETAILED DESCRIPTION

Reference will now be made in detail to embodiments of the disclosure, examples of which are illustrated in the accompanying drawings. Wherever possible, the same reference numbers will be used throughout the drawings to refer to the same or like parts. In general, a suffix such as "module" and "unit" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure. The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, etc. may be used to describe various components, but the components are not limited by such terms. The terms are used only for the purpose of distinguishing one component from other components.

When any component is described as "being connected" or "being coupled" to other component, this should be understood to mean that another component may exist between them, although any component may be directly connected or coupled to the other component. In contrast, when any component is described as "being directly connected" or "being directly coupled" to other component, this should be understood to mean that no component exists between them.

A singular expression can include a plural expression as long as it does not have an apparently different meaning in context.

In the present disclosure, terms "include" and "have" should be understood to be intended to designate that illustrated features, numbers, steps, operations, components, parts or combinations thereof are present and not to preclude the existence of one or more different features, numbers, steps, operations, components, parts or combinations thereof, or the possibility of the addition thereof.

In the drawings, sizes of the components may be exaggerated or reduced for convenience of explanation. For example, the size and the thickness of each component illustrated in the drawings are arbitrarily illustrated for convenience of explanation, and thus the present disclosure is not limited thereto unless specified as such.

If any embodiment is implementable differently, a specific order of processes may be performed differently from the order described. For example, two consecutively described processes may be performed substantially at the same time, or performed in the order opposite to the described order.

In the following embodiments, when layers, areas, components, etc. are connected, the following embodiments include both the case where layers, areas, and components are directly connected, and the case where layers, areas, and components are indirectly connected to other layers, areas, and components intervening between them. For example, when layers, areas, components, etc. are electrically connected, the present disclosure includes both the case where layers, areas, and components are directly electrically connected, and the case where layers, areas, and components are indirectly electrically connected to other layers, areas, and components intervening between them.

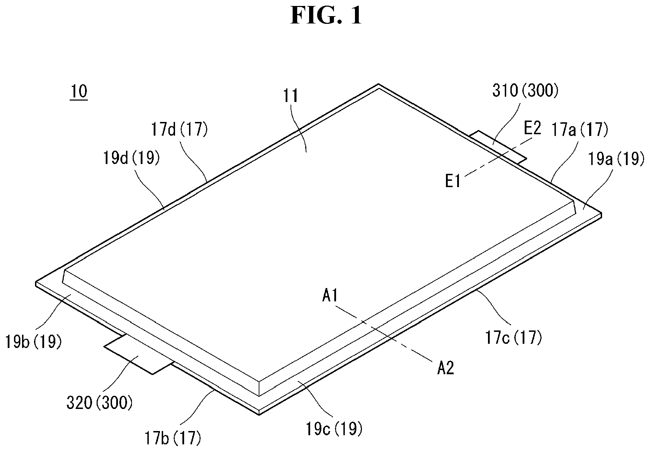

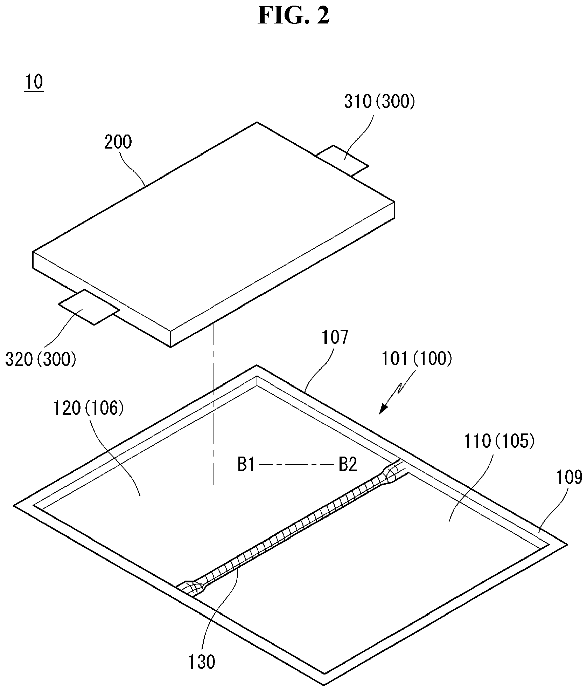

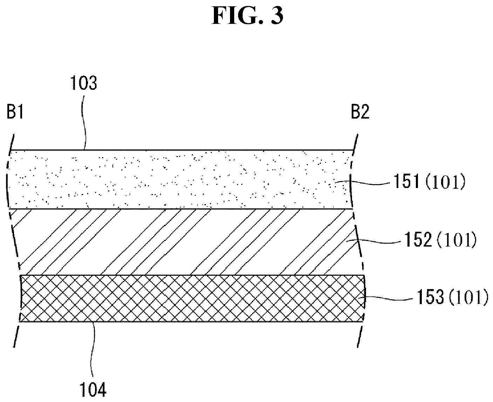

FIG. 1 is a perspective view of a battery cell 10 according to an embodiment of the present disclosure. FIG. 2 is an exploded perspective view of the battery cell 10 according to an embodiment of the present disclosure. FIG. 3 illustrates a cross section of a pouch unit 100 of FIG. 2 taken along B 1-B2.

Referring to FIGS. 1 to 3, the battery cell 10 may include a pouch unit 100 and an electrode assembly 200. The pouch unit 100 may accommodate the electrode assembly 200. In other words, the electrode assembly 200 may be wrapped by the pouch unit 100.

The electrode assembly 200 may be charged and discharged. When the electrode assembly 200 is charged, electrical energy of the electrode assembly 200 may increase. When the electrode assembly 200 is discharged, the electrical energy of the electrode assembly 200 may decrease. The electrode assembly 200 may be referred to as a "jelly roll".

The electrode assembly 200 may roughly form a hexahedral shape. The electrode assembly 200 may form a flat shape. For example, the electrode assembly 200 may form a flat hexahedral shape. For example, the electrode assembly 200 may form a shape that extends from one end and leads to other end.

The battery cell 10 may include an electrode tab 300. A plurality of electrode tabs 300 may be provided. For example, the electrode tab 300 may include a first electrode tab 310 and a second electrode tab 320. The electrode tab 300 may be formed of a material including metal.

The electrode tab 300 may be connected to the electrode assembly 200. The first electrode tab 310 may be connected to the one end of the electrode assembly 200. The second electrode tab 320 may be connected to the other end of the electrode assembly 200.

The electrode tab 300 may form a shape protruding from the electrode assembly 200. The electrode tab 300 may protrude to the outside of the pouch unit 100. For example, a portion of the electrode tab 300 may extend from the electrode assembly 200 and may be accommodated in the pouch unit 100. For example, another portion of the electrode tab 300 may extend from the portion of the electrode tab 300 and may be positioned outside the pouch unit 100.

The pouch unit 100 may include a pouch sheet 101. The pouch sheet 101 may be a sheet. The pouch sheet 101 may be flexible. The pouch sheet 101 may form a face.

For example, the pouch unit 100 may include a first pouch face 103 and a second pouch face 104. The first pouch face 103 may face the electrode assembly 200 or come into contact with the electrode assembly 200. The second pouch face 104 may be an opposite face of the first pouch face 103. The second pouch face 104 may form an outer surface of the battery cell 10.

The pouch sheet 101 may include a plurality of layers. For example, the pouch sheet 101 may include a first layer 151. The first layer 151 may form the first pouch face 103. For example, one face of the first layer 151 may form the first pouch face 103.

The pouch sheet 101 may include a second layer 152. The second layer 152 may contact other face of the first layer 151. The pouch sheet 101 may include a third layer 153. The third layer 153 may form the second pouch face 104. The third layer 153 may contact the second layer 152. The second layer 152 may be disposed between the first layer 151 and the third layer 153.

The third layer 153 may suppress moisture penetration from the outside. The third layer 153 may have molding and insulating characteristics. For example, the third layer 153 may be formed of a plurality of layers.

The first layer 151 may include a thermally polymerizable compound. When heat is applied to the thermally polymerizable compound, a polymerization or crosslinking reaction may occur in the thermally polymerizable compound. In this case, if heat is applied while the two different first layers 151 are in contact with each other, the two different first layers 151 may be bonded.

The first layer 151 may be formed of a material including at least one of polyethylene, polypropylene, polycarbonate, polyethylene terephthalate (PET), polyvinyl chloride, acrylic polymer, polyacrylonitrile, polyimide, polyamide, cellulose, aramid, nylon, polyester, polyparaphenylene benzobisoxazole, polyarylate, Teflon, and glass fibers. The first layer 151 may have a single layer structure or a multi-layer structure made of two or more materials.

The second layer 152 may include metal. For example, the second layer 152 may be formed of a material including at least one of aluminum (Al), chromium (Cr), iron (F2), manganese (Mn), and an alloy thereof. The second layer 152 may achieve an excellent mechanical strength, formability, and a moisture blocking effect.

The third layer 153 may protect the battery cell 10 from the outside. The third layer 153 may be formed of a film. The third layer 153 may be formed of a material including at least one of polyethylene, polypropylene, polycarbonate, polyethylene terephthalate (PET), polyvinyl chloride, acrylic polymer, polyacrylonitrile, and polyimide. For example, the third layer 153 may be formed of a material including polyethylene terephthalate (PET).

A melting point or fusing point of the third layer 153 may be higher than a melting point or fusing point of the first layer 151. For example, when heat is provided to the third layer 153, the heat may pass through the second layer 152 and reach the first layer 151. In this case, the third layer 153 may not melt, and the first layer 151 may be in a melted state.

The pouch sheet 101 may be molded. For example, when the pouch sheet 101 is press-processed, a shape of the pouch sheet 101 may be formed. For example, the pouch unit 100 may be concave on one face of the pouch sheet 101.

For example, the pouch unit 100 may include a first accommodation portion 110. The first accommodation portion 110 may be concave in the first pouch face 103. The first accommodation portion 110 may be convex in the second pouch face 104.

For example, the pouch unit 100 may include a second accommodation portion 120. The second accommodation portion 120 may be concave in the first pouch face 103. The second accommodation portion 120 may be convex in the second pouch face 104. The first accommodation portion 110 and the second accommodation portion 120 may be spaced apart from each other on the pouch sheet 101.

The accommodation portions 110 and 120 may indicate at least one of the first accommodation portion 110 and the second accommodation portion 120. The accommodation portions 110 and 120 may accommodate the electrode assembly 200. The accommodation portions 110 and 120 may accommodate a part of the electrode tab 300.

The pouch unit 100 may include a connection portion 130. The connection portion 130 may be positioned between the first accommodation portion 110 and the second accommodation portion 120 on the pouch sheet 101. The connection portion 130 may connect the first accommodation portion 110 and the second accommodation portion.

The pouch unit 100 may include a pouch edge 107. The pouch edge 107 may form an edge of the pouch sheet 101. The pouch edge 107 may indicate an edge of the pouch sheet 101. The pouch edge 107 may be formed along a perimeter of the accommodation portions 110 and 120. The pouch edge 107 may be formed or positioned along the perimeter of the accommodation portions 110 and 120 except between the first accommodation portion 110 and the second accommodation portion 120.

The pouch unit 100 may include a pouch edge portion 109. The pouch edge portion 109 may be a part of the pouch sheet 101. The pouch edge portion 109 may be formed between the accommodation portions 110 and 120 and the pouch edge 107.

After the electrode assembly 200 is accommodated in the first accommodation portion 110, the pouch sheet 101 may be folded. The pouch sheet 101 may be folded at the connection portion 130. For example, the pouch sheet 101 is folded in a state where the electrode assembly 200 is accommodated in the first accommodation portion 110, and thus the second accommodation portion 120 may accommodate or cover the electrode assembly 200. That is, the electrode assembly 200 may be disposed between the first accommodation portion 110 and the second accommodation portion 120 and may be accommodated in the accommodation portions 110 and 120.

The battery cell 10 may include a cell body 11. The cell body 11 may indicate a part including the electrode assembly 200 in the battery cell 10. For example, the cell body 11 may include the accommodation portions 110 and 120 and the electrode assembly 200.

The battery cell 10 may include a cell edge 17. The cell edge 17 may form an edge of the battery cell 10. The cell edge 17 may indicate an edge of the battery cell 10. The cell edge 17 may be formed or positioned along a perimeter of the cell body 11. The cell edge 17 may be formed by the pouch sheet 101.

The battery cell 10 may include a cell edge portion 19. The cell edge portion 19 may be formed or positioned along the cell edge 17. The cell edge portion 19 may be formed or positioned along the perimeter of the cell body 11. The cell edge portion 19 may be positioned or formed between the cell edge 17 and the cell body 11. The cell edge portion 19 may be formed by the pouch sheet 101.

The cell edge 17 may include a first cell edge 17a. The cell edge portion 19 may include a first cell edge portion 19a. The first cell edge portion 19a may be formed or positioned between the first cell edge 17a and the cell body 11. The first cell edge portion 19a may contact the first electrode tab 310. The first electrode tab 310 may protrude from the electrode assembly 200, pass through the first cell edge portion 19a, and protrude to the outside via the first cell edge 17a.

The cell edge 17 may include a second cell edge 17b. The cell edge portion 19 may include a second cell edge portion 19b. The second cell edge portion 19b may be formed or positioned between the second cell edge 17b and the cell body 11. The second cell edge portion 19b may contact the second electrode tab 320. The second electrode tab 320 may protrude from the electrode assembly 200, pass through the second cell edge portion 19b, and protrude to the outside via the second cell edge 17b.

The cell edge 17 may include a third cell edge 17c and a fourth cell edge 17d. The third cell edge 17c and the fourth cell edge 17d may be formed to extend from one end and lead to other end. The one end of each of the third cell edge 17c and the fourth cell edge 17d may be connected to the first cell edge 17a. The other end of each of the third cell edge 17c and the fourth cell edge 17d may be connected to the second cell edge 17b.

The first cell edge 17a and the second cell edge 17b may be positioned opposite each other. The cell body 11 may be positioned between the first cell edge 17a and the second cell edge 17b. The third cell edge 17c and the fourth cell edge 17d may be positioned opposite to each other. The cell body 11 may be positioned between the third cell edge 17c and the fourth cell edge 17d.

The cell edge portion 19 may include a third cell edge portion 19c. The third cell edge portion 19c may be formed or positioned between the third cell edge 17c and the cell body 11.

The cell edge portion 19 may include a fourth cell edge portion 19d. The fourth cell edge portion 19d may be formed or positioned between the fourth cell edge 17d and the cell body 11.

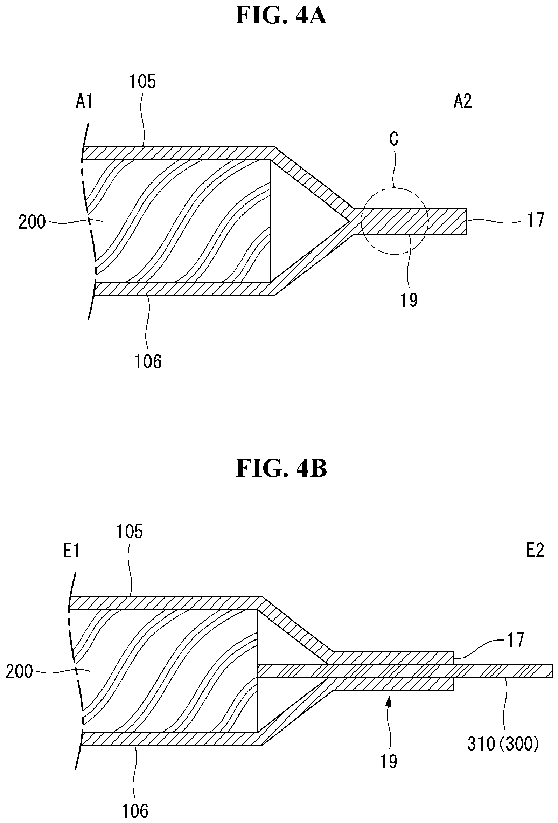

FIG. 4A illustrates a cross section of the battery cell 10 of FIG. 1 taken along A1-A2. FIG. 4A may be described together with FIGS. 1 to 3.

Referring to FIGS. 1 to 4A, the pouch unit 100 may include a first pouch part 105. The first pouch part 105 may be a part of the pouch sheet 101. The first pouch part 105 may include the first accommodation portion 110. The first pouch part 105 may include a portion extending from the first accommodation portion 110 in the pouch sheet 101. For example, the portion of the first pouch part 105 may extend from the first accommodation portion 110 and lead to the cell edge 17.

A second pouch part 106 may be a part of the pouch sheet 101. The second pouch part 106 may include the second accommodation portion 120. The second pouch part 106 may include a portion extending from the second accommodation portion 120 in the pouch sheet 101. For example, the portion of the second pouch part 106 may extend from the second accommodation portion 120 and lead to the cell edge 17.

The first pouch part 105 and the second pouch part 106 may meet each other at the cell edge portion 19. In other words, the pouch edge portion 109 in the first pouch part 105 may contact and may be attached to the pouch edge portion 109 in the second pouch part 106. That is, the pouch edge portion 109 of the first pouch part 105 and the pouch edge portion 109 of the second pouch part 106 may contact and may be attached to each other to form the cell edge portion 19.

The pouch edge portion 109 of the first pouch part 105 may be referred to as a "first pouch edge portion". The pouch edge portion 109 of the second pouch part 106 may be referred to as a "second pouch edge portion". The first pouch edge portion may be formed to extend from the first accommodation portion 110. The second pouch edge portion may be formed to extend from the second accommodation portion 120.

FIG. 4B illustrates a cross section of the battery cell 10 of FIG. 1 taken along E1-E2.

Referring to FIG. 4B, the first pouch edge portion and the second pouch edge portion may be spaced apart from each other at the cell edge portion 19 by the electrode tab 300. That is, the electrode tab 300 may be disposed between the pouch edge portion 109 of the first pouch part 105 and the pouch edge portion 109 of the second pouch part 106 at the cell edge portion 19.

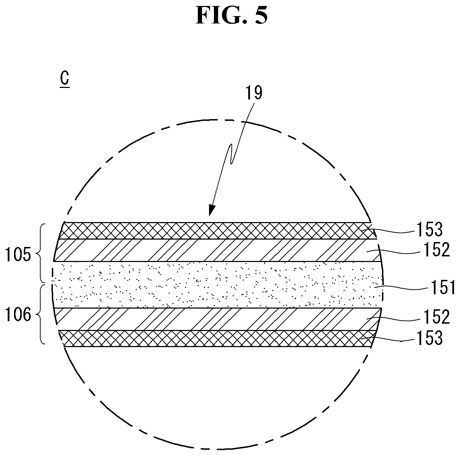

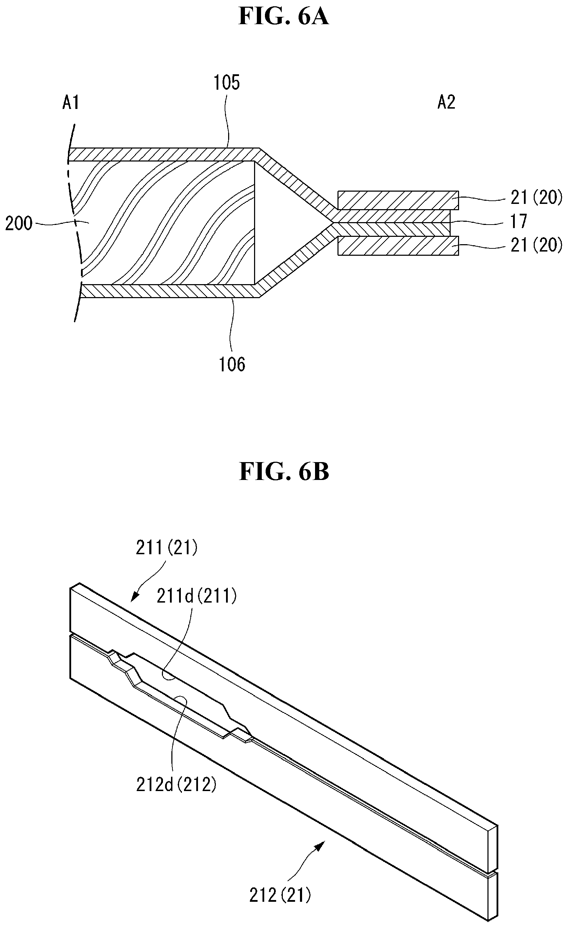

FIG. 5 illustrates in detail a portion 'C' of FIG. 4A. FIG. 6A illustrates that a pouch sheet is sealed using a sealing block. FIG. 5 and FIG. 6A may be described together with FIGS. 1 to 4A.

Referring to FIGS. 1 to 6A, the first layer 151 of the pouch edge portion 109 of the first pouch part 105 may contact the first layer 151 of the pouch edge portion 109 of the second pouch part 106.

In a state where the first layer 151 of the pouch edge portion 109 of the first pouch part 105 contacts the first layer 151 of the pouch edge portion 109 of the second pouch part 106, heat may be applied to the pouch edge portion 109 of the first pouch part 105 and the pouch edge portion 109 of the second pouch part 106.

A sealing block 21 may apply heat to the cell edge portion 19. The sealing block 21 may apply pressure to the cell edge portion 19. When the sealing block 21 applies heat or/and pressure to the cell edge portion 19, the first layer 151 of the pouch edge portion 109 of the first pouch part 105 may contact the first layer 151 of the pouch edge portion 109 of the second pouch part 106. Hence, the pouch sheet 101 can be sealed.

The sealing block 21 may be included in a shape forming device 20. A plurality of sealing blocks 21 may be provided. For example, the sealing block 21 may include a pair of sealing blocks 21. The shape forming device 20 may change the state or shape of the cell edge portion 19.

When an event occurs in the battery cell 10, gas may be generated inside the battery cell 10. The gas generated inside the battery cell 10 may apply pressure to the cell edge portion 19. The first layer 151 may resist a gas pressure.

A force (or degree) of resistance of the cell edge portion 19 to the gas pressure may have a positive correlation with a thickness of the first layer 151 at the cell edge portion 19. In other words, if the thickness of the first layer 151 at the cell edge portion 19 increases, the degree of resistance of the cell edge portion 19 to the gas pressure may increase. The thickness of the cell edge portion 19 may be measured based on a direction between the pouch edge portion 109 of the first pouch part 105 and the pouch edge portion 109 of the second pouch part 106.

FIG. 6B illustrates a sealing block sealing a pouch sheet on which an electrode tab is positioned.

Referring to FIGS. 1 and 6B, the sealing block 21 may include a first sealing block 211 and a second sealing block 212. The first sealing block 211 and the second sealing block 212 may include a first sealing block concave portion 211d and a second sealing block concave portion 212d, respectively.

Each of the first sealing block concave portion 211d and the second sealing block concave portion 212d may form a concave shape corresponding to the shape of the electrode tab 300. The first sealing block concave portion 211d and the second sealing block concave portion 212d may face each other. The first sealing block concave portion 211d and the second sealing block concave portion 212d may be symmetrical to each other.

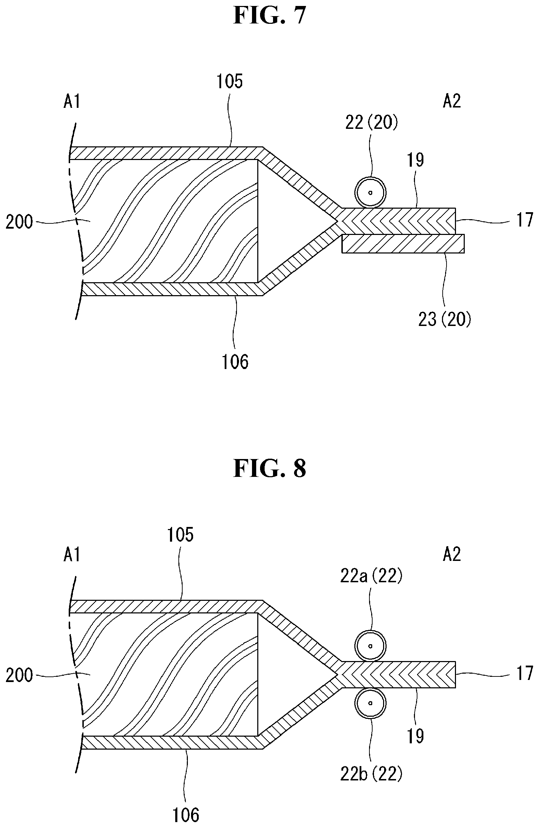

FIG. 7 illustrates that a shape of a cell edge portion is formed using a roller and a plate. Referring to FIG. 7, the shape forming device 20 may include a roller 22 and a plate 23. The cell edge portion 19 may be disposed between the roller 22 and the plate 23. The roller 22 and the plate 23 may apply pressure to the cell edge portion 19.

For example, in a state where a temperature of the cell edge portion 19 is higher than a room temperature, the roller 22 and the plate 23 may provide pressure to the cell edge portion 19. For another example, the shape forming device 20 may provide heat to the cell edge portion 19. That is, the roller 22 and the plate 23 may provide pressure to the cell edge portion 19 while at least one of the roller 22 and the plate 23 provides heat to the cell edge portion 19.

When the roller 22 applies pressure toward the plate 23 and moves while rolling, the first layer 151 (see FIG. 5) of the cell edge portion 19 may move in a moving direction of the roller 22. When the roller 22 applies pressure toward the plate 23 and moves while rolling, a thickness distribution of the first layer 151 (see FIG. 5) of the cell edge portion 19 may vary.

FIG. 8 illustrates that a shape of a cell edge portion is formed using a pair of rollers.

The roller 22 may include a pair of rollers 22a and 22b. For example, the roller 22 may include a first roller 22a and a second roller 22b. The cell edge portion 19 may be disposed between the first roller 22a and the second roller 22b.

The pair of rollers 22a and 22b may provide pressure to the cell edge portion 19. For example, in a state where the temperature of the cell edge portion 19 is higher than the room temperature, the pair of rollers 22a and 22b may apply pressure to the cell edge portion 19. For another example, the pair of rollers 22a and 22b may provide pressure to the cell edge portion 19 while at least one of the pair of rollers 22a and 22b provides heat to the cell edge portion 19.

When the pair of rollers 22a and 22b apply pressure toward the cell edge portion 19 and move while rolling, the first layer 151 (see FIG. 5) of the cell edge portion 19 may move in a moving direction of the pair of rollers 22a and 22b. When the pair of rollers 22a and 22b apply pressure toward the plate 23 and move while rolling, the thickness distribution of the first layer 151 (see FIG. 5) of the cell edge portion 19 may vary.

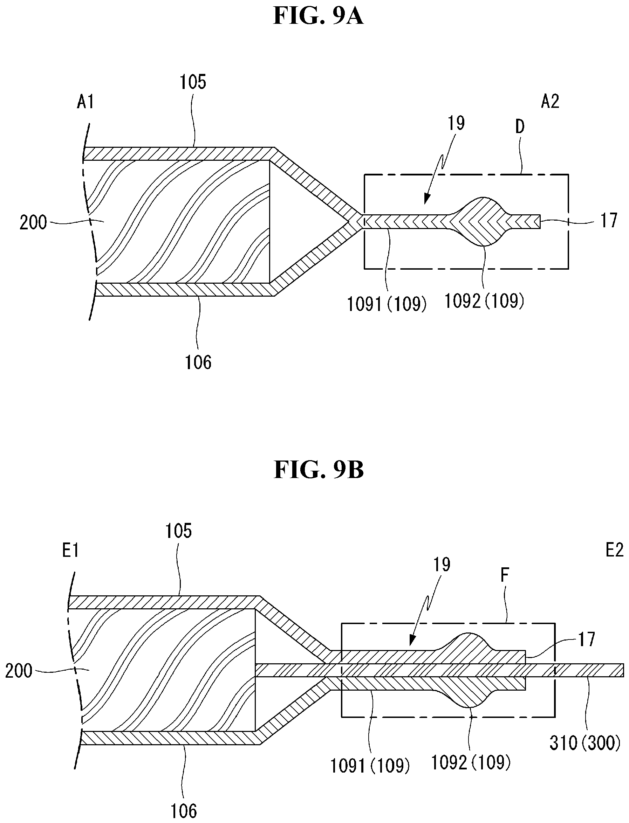

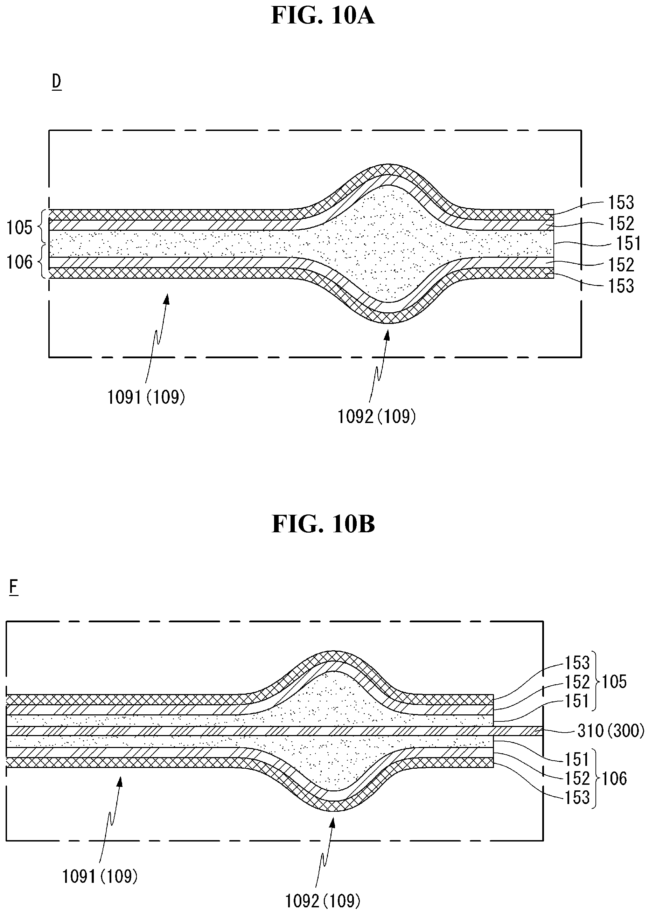

FIG. 9A illustrates the cell edge portion after the cell edge portion illustrated in FIG. 4A is molded. FIG. 10A illustrates in detail a portion 'D' of FIG. 9A. FIG. 9A and FIG. 10A may be described together with FIGS. 7 and 8,

Referring to FIGS. 7, 8, 9A and 10A, the first layer 151 of the cell edge portion 19 may move in the moving direction of the roller 22. In other words, a width-direction thickness distribution of the first layer 151 of the cell edge portion 19 may vary depending on the movement of the roller 22. A width direction of the first layer 151 of the cell edge portion 19 may be parallel to a direction toward the cell edge 17 in the electrode assembly 200.

When the width-direction thickness distribution of the first layer 151 of the cell edge portion 19 varies, a width-direction thickness distribution of the cell edge portion 19 may vary. For example, the width-direction thickness distribution of the cell edge portion 19 may correspond to the width-direction thickness distribution of the first layer 151 of the cell edge portion 19.

For example, the cell edge portion 19 may include a convex portion 1092. The convex portion 1092 may be convex in the thickness direction of the cell edge portion 19. The convex portion 1092 may form an inclined surface.

For example, a thickness of the convex portion 1092 may decrease as it goes toward the electrode assembly 200. For another example, the thickness of the convex portion 1092 may decrease as it goes toward the cell edge 17.

For example, the cell edge portion 19 may include a flat portion 1091. The flat portion 1091 may not form an inclination. A width-direction thickness distribution of the flat portion 1091 may be uniform. A thickness of the flat portion 1091 may be less than a thickness of the convex portion 1092. The flat portion 1091 may be connected to the convex portion 1092. The convex portion 1092 may be positioned between the flat portion 1091 and the cell edge 17.

The flat portion 1091 and the convex portion 1092 may be included in the pouch edge portion 109. For example, the pouch edge portion 109 of the first pouch part 105 and the pouch edge portion 109 of the second pouch part 106 may contact and be coupled to each other to form the flat portion 1091 and the convex portion 1092.

FIG. 9B illustrates the cell edge portion after the cell edge portion illustrated in FIG. 4B is molded. FIG. 10B illustrates in detail a portion 'F' of FIG. 9B. FIG. 9B and FIG. 10B may be described together with FIGS. 4B and 8,

Referring to FIGS. 4B, 8, 9B and 10B, in the cell edge portion 19 including the electrode tab 300, the first pouch part 105 and the second pouch part 106 may be individually coupled to the electrode tab 300.

For example, the first layer 151 and the electrode tab 300 may be coupled to each other by heat. However, when the first layer 151 is formed of a material including a resin material and the electrode tab 300 is formed of a material including a metal, a coupling force between the first layer 151 and the electrode tab 300 may be less than a coupling force between the two first layers 151.

Therefore, it may be necessary to increase the coupling force between the first layer 151 and the electrode tab 300. The roller 22 may apply pressure to at least one of the first pouch part 105 and the second pouch part 106. Hence, the convex portion 1092 can be formed.

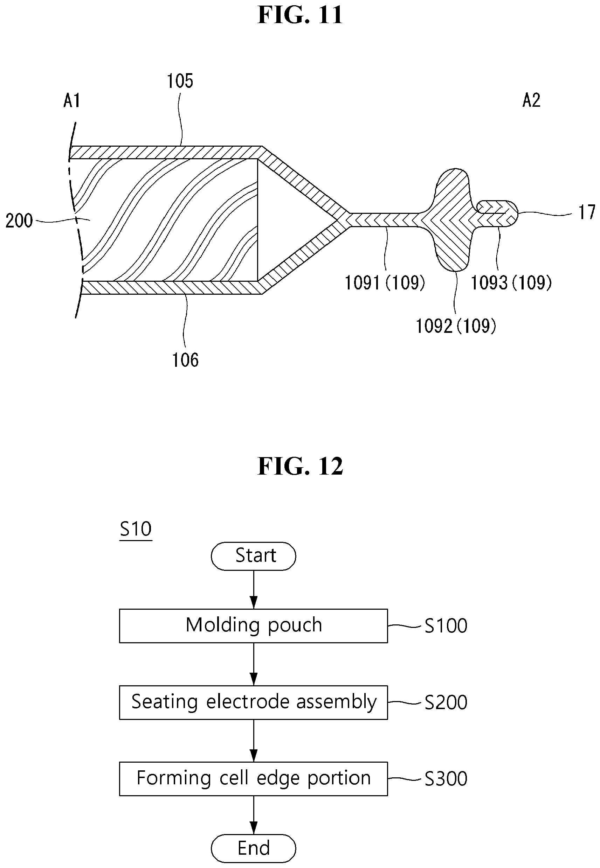

FIG. 11 illustrates that an end of a cell edge portion is folded.

Referring to FIGS. 9A, 10A and 11, a width-direction end of the cell edge portion 19 may be folded. The cell edge portion 19 may include a folding portion 1093. In a state where the width-direction end of the cell edge portion 19 is folded, the roller 22 (see FIGS. 7 and 8) may apply pressure to the cell edge portion 19 to form the convex portion 1092.

The folding portion 1093 may suppress movement of the first layer 151. Therefore, when the roller 22 (see FIGS. 7 and 8) moves toward the cell edge 17 in the electrode assembly 200, the first layer 151 may move toward the cell edge 17, but the movement of the first layer 151 may be suppressed in the folding portion 1093.

The folding portion 1093 may be formed in the cell edge portion 19 not having the electrode tab 300 (see FIG. 1). For example, the folding portion 1093 may be formed at the third cell edge portion 19c and the fourth cell edge portion 19d.

Hence, the convex portion 1092 may be formed adjacent to the folding portion 1093. In addition, a thickness of the convex portion 1092 in a state in which the folding portion 1093 is formed may be greater than a thickness of the convex portion 1092 in a state in which the folding portion 1093 is not formed.

FIG. 12 is a flow chart illustrating a method S10 of manufacturing a battery cell according to an embodiment of the present disclosure.

Referring to FIGS. 1 to 12, the method S10 of manufacturing the battery cell may comprise a pouch molding step S100. In the step S100, accommodation portions 110 and 120 may be formed in a pouch sheet 101.

The method S10 of manufacturing the battery cell may comprise an electrode assembly seating step S200. In the step S200, an electrode assembly 200 may be accommodated in the accommodation portions 110 and 120. For example, in the step S200, the electrode assembly 200 may be seated in the first accommodation portion 110.

The method S10 of manufacturing the battery cell may comprise a cell edge portion forming step S300. In the step S300, a cell edge portion 19 may be formed. For example, in the step S300, a first pouch part 105 and a second pouch part 106 may contact and be coupled to each other. For example, in the step S300, a thickness profile of the cell edge portion 19 may be modified.

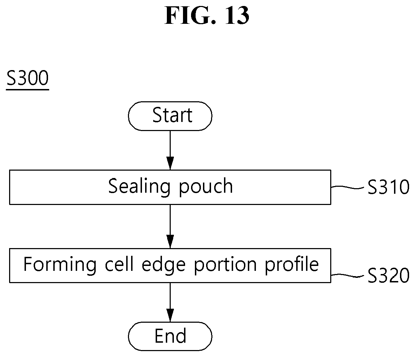

FIG. 13 is a flow chart illustrating the cell edge portion forming step S300.

Referring to FIGS. 1 to 13, the cell edge portion forming step S300 may comprise a pouch sealing step S310. In the step S310, a pouch edge portion 109 of the first pouch part 105 and a pouch edge portion 109 of the second pouch part 106 may contact and be coupled to each other. In the step S310, a sealing block 21 may apply heat to the cell edge portion 19 to seal a pouch unit 100.

The cell edge portion forming step S300 may comprise a cell edge portion profile forming step S320. In the step S320, a width-direction profile of the cell edge portion 19 may be formed. For example, in the step S320, when a roller 22 applies pressure (or pressure and heat) to the cell edge portion 19, a width-direction profile of the cell edge portion 19 may be formed. That is, in the step S320, a convex portion 1092 may be formed.

The cell edge portion forming step S300 may comprise a folding portion forming step. The folding portion forming step may be performed after the pouch sealing step S310. The folding portion forming step may be performed before the cell edge portion profile forming step S320. In the folding portion forming step, an end of the cell edge portion 19 may be folded.

Some embodiments or other embodiments of the present disclosure described above are not mutually exclusive or distinct from each other. Configurations or functions of some embodiments or other embodiments of the present disclosure described above can be used together or combined with each other.

It is apparent to those skilled in the art that the present disclosure can be embodied in other specific forms without departing from the spirit and essential features of the present disclosure. Accordingly, the above detailed description should not be construed as limiting in all aspects and should be considered as illustrative. The scope of the present disclosure should be determined by rational interpretation of the appended claims, and all modifications within an equivalent scope of the present disclosure are included in the scope of the present disclosure.

## Claims

1. A battery cell (10) including an electrode assembly (200) and a pouch unit (100) accommodating the electrode assembly (200), the battery cell (10) comprising:
a cell body (11) including an accommodation portion accommodating the electrode assembly (200) and the electrode assembly (200), the accommodation portion being a part of the pouch unit (100);
a cell edge (17) forming a perimeter of the battery cell; and
a cell edge portion (19) formed between the cell edge (17) and the cell body (11),
wherein the pouch unit (100) is made of a pouch sheet,
wherein the cell edge portion (19) includes:
a first pouch edge portion and a second pouch edge portion facing each other, the first and second edge portions extending from the accommodation portion; and
a convex portion (1092) convex in a thickness direction of the cell edge portion (19).

2. The battery cell of claim 1, further comprising:
an electrode tab (300) extending from the electrode assembly (200) and protruding from the cell edge portion (19), the electrode tab (300) being positioned between the first pouch edge portion and the second pouch edge portion.

3. The battery cell of any of claims 1 or 2, wherein the convex portion (1092) is formed in each of the first pouch edge portion and the second pouch edge portion.

4. The battery cell of any of claims 1 to 3, wherein the cell edge portion (19) further includes a flat portion (1091) having a thickness less than a thickness of the convex portion (1092).

5. The battery cell of any of claims 1 to 4, wherein the cell edge portion (19) further includes a folding portion (1093) formed by folding an end of the cell edge portion (19).

6. The battery cell of claim 5, wherein the cell edge portion (19) further includes a flat portion (1091) having a thickness less than a thickness of the convex portion (1092), and
wherein the convex portion (1092) is positioned between the flat portion (1091) and the folding portion (1093).

7. The battery cell of any of claims 1 to 6, wherein the pouch sheet includes:
a first pouch face contacting the electrode assembly (200); and
a second pouch face forming an outer surface of the battery cell,
wherein the accommodation portion is concave on the first pouch face.

8. The battery cell of claim 7, wherein the accommodation portion includes a first accommodation portion (110) and a second accommodation portion (120) that are concave on the first pouch face and are spaced apart from each other on the pouch sheet.

9. The battery cell of claim 8, wherein the first pouch edge portion extends from the first accommodation portion (110), and
wherein the second pouch edge portion extends from the second accommodation portion (120).

10. The battery cell of any of claims 1 to 9, wherein the pouch sheet includes:
a first layer forming a first pouch face contacting the electrode assembly (200);
a third layer forming a second pouch face that is an outer surface of the battery cell; and
a second layer positioned between the first layer and the third layer and formed of a material including a metal,
wherein the first layer, the second layer, and the third layer are sequentially stacked.

11. The battery cell of claim 10, wherein a melting point of the third layer is higher than a melting point of the first layer.

12. A method of manufacturing a battery cell including an electrode assembly (200) and a pouch unit (100) accommodating the electrode assembly (200), the method comprising:
a pouch molding step of forming a concave accommodation portion on one face of a pouch sheet forming the pouch unit (100);
an electrode assembly seating step of seating the electrode assembly (200) in the accommodation portion; and
a cell edge portion forming step of forming a cell edge portion (19) sealing the pouch sheet,
wherein the cell edge portion (19) includes a convex portion (1092) that is convex in a thickness direction of the cell edge portion (19).

13. The method of claim 12, wherein the cell edge portion forming step comprises:
a pouch sealing step of forming the cell edge portion (19) and applying a heat to a first pouch edge portion and a second pouch edge portion facing each other to seal the pouch sheet; and
a cell edge portion profile forming step of applying a pressure to the cell edge portion (19) to form the convex portion (1092).

14. The method of claim 13, wherein the cell edge portion forming step further comprises:
a folding portion forming step of folding an end of the cell edge portion (19), the folding portion forming step being performed between the pouch sealing step and the cell edge portion profile forming step.

15. The method of any of claims 13 or 14, wherein the cell edge portion profile forming step comprises:
a step in which a roller rolls and applies a pressure to the cell edge portion (19).
